# EUROPEAN PATENT APPLICATION

(11) **EP 4 592 585 A1**
(43) Date of publication of application: **30.07.2025**
(21) Application number: 24290002.5
(22) Date of filing: 26.01.2024
(51) Int. Cl.: F21K 9/69, F21S 41/24, F21V 5/00, F21V 5/04, F21V 7/00, G02B 3/00, G02B 3/08, F21V 8/00

(54) **GLARE-REDUCING OPTIC**

(71) Applicant: ZG Lighting France S.A.S, 75002 Paris (FR)
(72) Inventor: Guitton, Adrien, 6851 Dornbirn (AT); Taron, Alexandre, 6851 Dornbirn (AT)
(74) Representative: Kiwit, Benedikt

(57) **Abstract**

Optic assembly (10), comprising at least one light entrance surface, configured to receive light from a light source (2i), at least one first light emission structure (100), a plurality of second light emission structures (110), and a body (120), configured to receive light from the light entrance surface (130), guide a first part of the received light to the at least one first light emission structure (100), distribute a second part of the received light within the body, and guide the distributed second part of the received light to the plurality of second light emission structures (110).

## Description

The invention relates to an optic assembly for reducing glare, and a luminaire employing said optic assembly.

Glare is a problem in a great deal of lighting scenarios. A known manner of reducing glare is to add a diffusor to an optic assembly. The use of a diffusor though reduces lighting efficiency. Also, the use of light sources, which produce light over a large surface area, such as fluorescent gas discharge lamps achieves a reduction in glare. This approach though is limiting with regard to the employable light sources. Especially, in combination with LED light sources, glare is a significant problem, since the light emission of LEDs is concentrated to very small surface areas.

The document US 2022/0252775 A1 shows an optic assembly for reducing glare. Light from a light source enters a lens, and is distributed by this lens into a broad emission angle. Part of the resulting light is scattered through a large surface area body, while a part of the resulting light is focused through further lenses and emitted in a directional beam. This approach is disadvantageous since it requires a great deal of components.

Accordingly, the object of the invention is to provide an optic assembly and an according luminaire, which achieve a glare-reduced light emissions characteristic while requiring only a simple construction manner.

The object is solved by the features of the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect of the invention, an optic assembly is provided. The optic assembly comprises at least one light entrance surface, configured to receive light from a light source, at least one first light emission structure, and a plurality of second light emission structures. Moreover, the assembly comprises a body, configured to receive light from the light entrance surface, guide a first part of the received light to the at least one first light emission structure, distribute a second part of the received light within the body, and guide the distributed second part of the received light to the plurality of second light emission structures. By directly distributing the light from the light source to both the at least one first light emission structure and the plurality of second light emission structures, a very simple construction and a glare-reduced light emissions characteristic can be achieved.

Advantageously, the light does not leave the body before being guided into the at least one first light emission structure and the plurality of second emission structures. Thereby, a loss of light is prevented.

Preferably, the body consists of a plastic material, most preferably from a pmma material. Additionally or alternatively, the at least one first light emission structure consist of a plastic material, most preferably a pmma material. Additionally or alternatively, the plurality of second light emission structures consist of a plastic material, preferably from a pmma material. The manufacture of the structures from a plastic material, preferably from a pmma material allows for a very simple manufacturing process and beneficial light transmission and emission characteristics.

Advantageously, the body, the at least one first light emission structure, and the plurality of second light emission structures consist of a single piece of material. Alternatively, the body and the at least one of light emission structure or the body and the second plurality of light emission structures or the at least one first light emission structure and the plurality of second light emission structures can be manufactured from a single piece of material. All of these options result in a very simple manufacturing process, and improve the light transmission characteristics due to a reduced number of internal surfaces, which might scatter light.

Advantageously, the plurality of first light emission structures are distributed over light emission surface of the optic assembly. The plurality of second light emission structures are arranged between the plurality of first light emission structures along the light emission surface of the optic assembly. A significant reduction in glare can thereby be achieved.

Further advantageously, the optic assembly comprises a plurality of first light emitting structures, and a plurality of light entrance surfaces. One of the plurality of light entrance surfaces is arranged opposite of each first emission structures; i.e. every one of the light entrance surfaces is (optically) associated with another one of the first emission structures. The plurality of second light emission structures are arranged between the plurality of first light emission structures along the light emission surface of the optic assembly, preferably filling the entire area between the plurality of first light emission structures. Thereby, an especially high amount of glare reduced illumination can be achieved.

Advantageously, the plurality of first light emission structures have an average distance d3 from each other. d3 is 5mm-50mm, preferably 8mm-30mm, most preferably 12mm-20mm. By use of these distances, a beneficial directed light emission characteristic is achieved, while still leaving enough room for the second light emission structures to achieve a glare reduction and a diffuse light emission.

Preferably, the at least one first light emission structure comprises a circular lens, having a diameter d1 of 2mm-30mm, preferably 4mm-20mm, most preferably 8mm-12mm. Additionally or alternatively, the at least one first light emission structure comprises elliptical lens, having a major axis of d1 of 2mm-30mm, preferably 4mm-20mm, most preferably 8mm-12mm. Also an asymmetrical lens can be used. Advantageous light emission characteristics can thereby be achieved. In case of the lens being circular, a symmetric light distribution characteristic is achieved. In case of the lens being elliptical or asymmetrical, an asymmetrical light distribution can be achieved.

Advantageously, the plurality of second light emission structures are a matrix of lenses. Beneficial light diffusing characteristics can thereby be achieved.

Advantageously, the lenses of the matrix of lenses have a diameter d2 of 0,5mm-10mm, preferably 1mm-5mm, most preferably 1,5mm-3mm. Thereby, a beneficial diffusing characteristic can be achieved.

Preferably, the lenses of the matrix of lenses are circular or elliptical or hexagonal or square shaped or rectangle shaped lenses. Additionally or alternatively, the lenses of the matrix of lenses are convex with regard to the body of the optical assembly. Additionally or alternatively, the edge of the surface of each of the lenses of the matrix of lenses rises with an angle a, wherein a is 5°-45°, preferably 10°-35°, most preferably 15°-25°. By use of any of these measures, the diffusing characteristics can be improved, while a simple manufacturing is achieved.

Advantageously, the body, the at least one first light emission structure and the plurality of second light emission structures form a largely flat shape or a convex shape with regard to a light emission direction. A simple manufacturing can thereby be achieved, while attaining a beneficial light emission characteristic.

Preferably, the body comprises a rear surface. The rear surface and emission surfaces of the at least one first light emission structure and the plurality of second light emission structures are configured to reflect light inside the body, preferably by way of total internal reflection, facilitating a distribution of light within the body. A homogenous light emission over the entire surface area of the optic assembly is thereby achieved. This allows for a significant increase in visual comfort, due to reducing the contrast between the bright spots of individual LEDs and the background of and optic.

Advantageously, the at least one first light emission structure is configured to emit light in a directed manner, and the plurality of second light emission structures are configured to emit light in a diffuse manner. This achieves a desired light emission distribution.

According to a second aspect of the present invention a luminaire is provided. The luminaire comprises an optic assembly according to the first aspect and a light source. A beneficial lighting characteristic can thereby be achieved.

Advantageously, the light source is an LED module, comprising at least one LED. The at least one LED is arranged opposite of the at least one first light emitting structure. Thereby, a high intensity directed light emission characteristic through the first light emission structures can be achieved, while a diffuse light emission through the second light emission structures is achieved for reducing glare.

Advantageously, the LED module is coated with white reflective material. This achieves an efficiency improvement.

An exemplary embodiment of the invention is now further explained with respect to the drawings, in which
- Fig. 1: shows a first embodiment of the optical assembly according to the present invention;
- Fig. 2: shows a detail view of a second embodiment of the optical assembly of the present invention;
- Fig. 3: shows a first embodiment of the luminaire according to the present invention including a third embodiment of the optical assembly of the present invention;
- Fig. 4: shows a fourth embodiment of the optical assembly according to the present invention;
- Fig. 5: shows a fifth embodiment of the optical assembly of the present invention;
- Fig. 6: shows a sixth embodiment of the optical assembly according to the present invention;
- Fig. 7: shows a seventh embodiment of the optical assembly according to the present invention;
- Fig. 8: shows a light emission characteristic of an eighth embodiment of the optical assembly according to the present invention;
- Fig. 9: shows a light emission characteristic divided by light emission structure, of a ninth embodiment of the optical assembly according to the present invention;
- Fig. 10: shows a light distribution of a tenth embodiment of the optical assembly of the present invention;
- Fig. 11: shows a light distribution of an eleventh embodiment of the optical assembly of the present invention;
- Fig. 12: shows a heat map of light emission of a twelfth embodiment of the optical assembly according to the present invention.

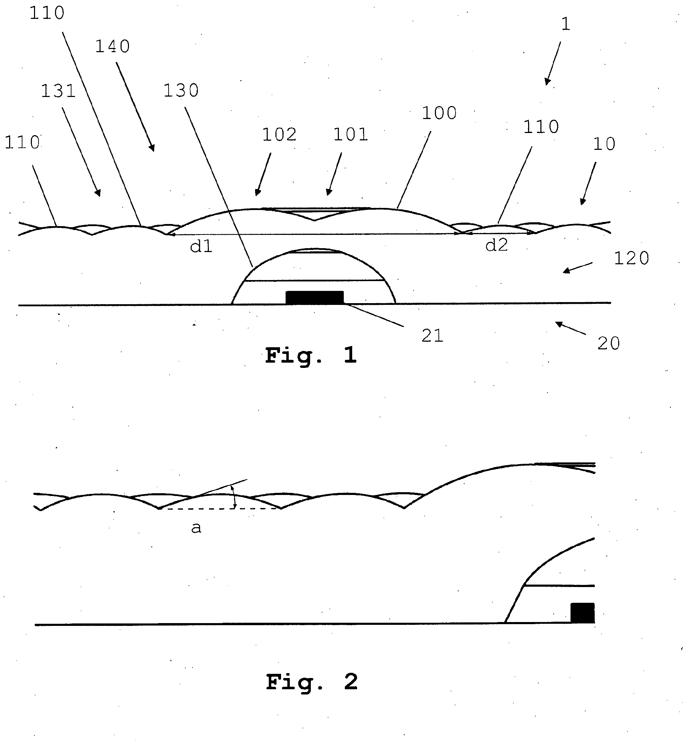

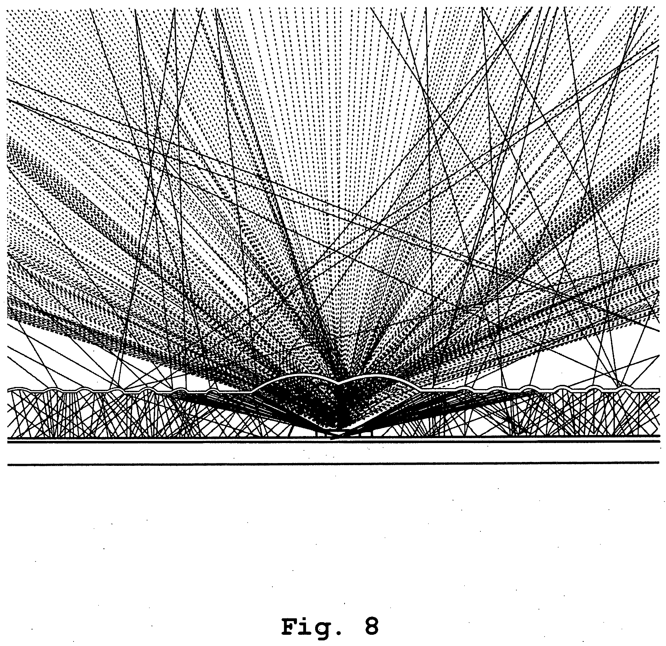

First we demonstrate the general construction and function of an exemplary embodiment along Fig. 1. With regard to Fig. 2-7, further details of different embodiments are explained in detail. Along Fig. 8-12, the light distribution of different embodiments is explained in greater detail. Similar entities and reference numbers in different figures have been partially omitted.

In Fig. 1, a first embodiment of the optic assembly 10 as part of a luminaire 1 is shown. The luminaire 1 comprises the optic assembly 10 and a light source 21 mounted on a substrate 20. The optic assembly 10 comprises a first light emission structure 100, and a plurality of second light emission structures 110, of which a number are shown, here. The optic assembly 10 moreover comprises a body 120. The optic assembly 10 comprises a light entrance surface 130 and a light emission surface 131. The light entrance surface 130 is here for example formed by a cavity on a rear side of the body 120. Alternatively, instead of a cavity, also a flat rear surface of the body 120 could be used as a light entrance surface 130. The light source 21 would then be mounted against the rear surface of the body 120, preferably with at least a small gap, so as not to damage the light source 21 during mounting.

The light emission surface 131 covers both the surface of the plurality of first light emission structures 100 and the plurality of second light emission structures 110.

The light source 21 is mounted directly on the substrate 20. For example, the light source 21 is an LED, or a cluster of LEDs. The body 120 is preferably mounted directly on the substrate 20.

The first light emission structure 100, shown here has a diameter d1, which is preferably 2mm-30mm, more preferably 4mm-20mm, most preferably 8mm-12mm.

The first light emission structure 100, shown here preferably is a lens, especially either a circular lens, or an elliptical lens. In case of an elliptical lens, the measurements given before for the diameter d1 are to be considered measurements for the major axis of the ellipse. Also other shapes of lenses can be used.

Also asymmetrical lenses, leading to an asymmetrical light distribution characteristics can be used as first light emission structures. A combination of symmetrical and asymmetrical lenses, and lenses of different shapes in general, may be used.

The first light emission structure 100 shown here has a protruding ring section 102 and an indentation 101 in the cross-sectional view of Fig. 1. This central indentation allows for a further fine-timing of the light emission characteristic.

The plurality of second light emission structures 110 advantageously form a matrix of lenses. These lenses can also have different shapes. Circular lenses, elliptical lenses, square-shaped lenses, rectangular-shaped lenses or hexagonal lenses are perceivable. Also, other shapes of lenses can be used on this matrix of lenses. Advantageously, the entire surface area of the optical assembly, not covered by the plurality of first light emission structures 100 are covered by the plurality of second light emission structures 110.

The lenses of the matrix of lenses preferably have a diameter d2 of 0,5-10mm, more preferably 1mm-5mm, most preferably 1,5mm-3mm.

The body 120 and/or the at least one first light emission structure 110 and/or the plurality of second light emission structures 110 may be manufactured from the same piece of material. Manufacturing at least two, preferably all three of these components from a single piece of material achieve a very simple manufacturing process.

Any or all of these components are moreover advantageously manufactured from a plastic material, preferably by a pmma material. This further simplifies manufacturing.

In this embodiment only a single first light emission structure 100 is comprised by the optic assembly 10. An arrangement of a plurality of first light emission structures 100, as shown in the further figures is though possible.

In Fig. 2, a second embodiment of the optic assembly according to the present invention is shown. Here, the shape of the lenses of the second light emission structures 110 is shown in detail. Especially, an angle a, with which the lens of the second light emission structure 110 rises at its edge is readily visible. This angle a is 5-45°, preferably 10-35°, most preferably 15-25°.

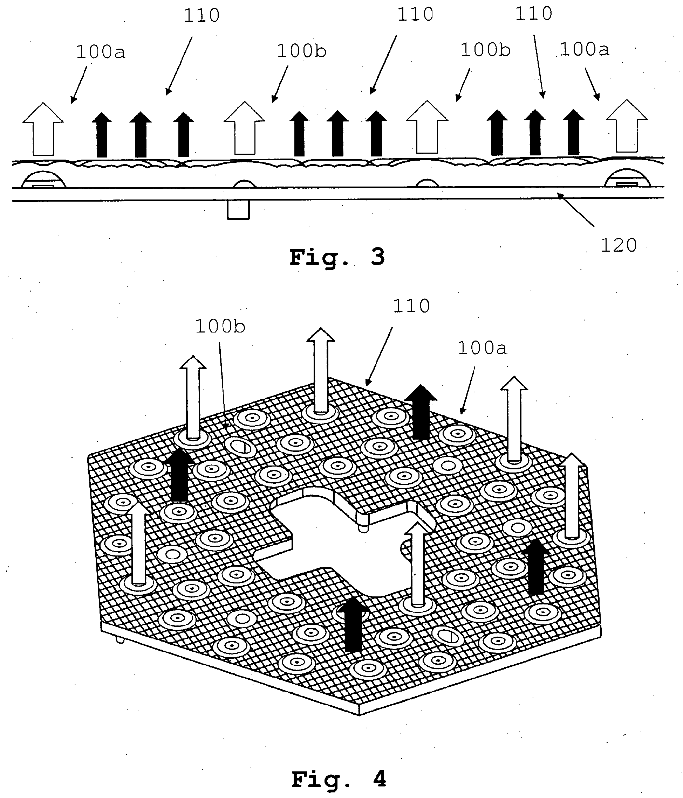

In Fig. 3, an embodiment of the luminaire according to the present invention including an optic assembly according to the present invention is shown. Here a plurality of first light emission structures 100 and the plurality of second light emission structures 110 are shown. Here, the first light emission structures 100a, 100b are shown with two different cut portions. While the first light emission structures 100a show a cut through a center of the respective first light emission structure 100a, the first light emission structures 100b are shown cut slightly off center. Also a use of two or more different types of first light emission structures is possible. By using first light emission structures of different light emissions characteristics, an even more precise control over the overall light emission characteristic can be achieved.

Also, in Fig. 3, a substrate 120, on which the optic assembly is mounted, is readily visible.

Fig. 4 shows a further embodiment of the optic assembly according to the present invention in a three-dimensional view. Here, the distribution of the first light emission structures 100and the second light emission structures 110 over a surface area of the optic assembly is shown.

The cross-shaped recess in the central area of the optic assembly is only for mounting purposes and/or for aesthetical purposes, and has no relevance to the present invention.

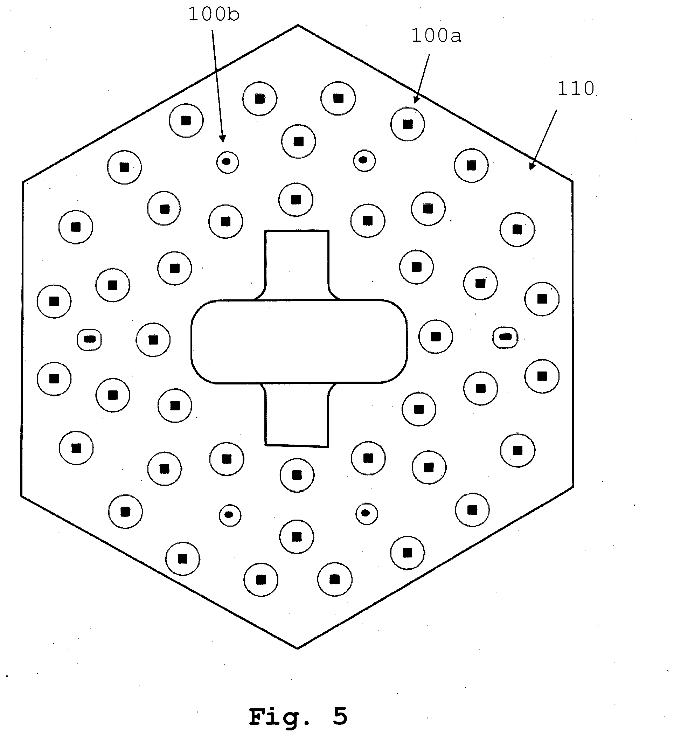

In Fig. 5, an further embodiment of the optical assembly of the present invention in shown. In a simplified top-down view, here the distribution of first light emission structures 100and second light emission structures 110 are shown. Mounting holes 109 are shown.

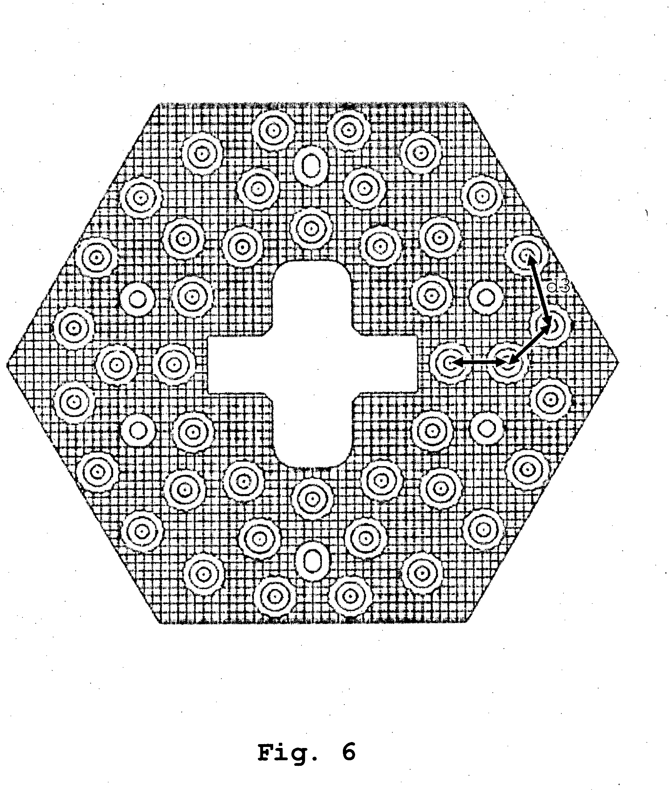

In Fig. 6, a further embodiment of the optic assembly according to the present invention is shown. In Fig. 6, a hexagonal shape of the optical assembly is shown. Here an average distance d3 between the first light emission structures is shown. The distance is not always the same, but d3 refers to the average distance between adjacent first light emission structures. In calculating this average distance, obviously, the central cross-shaped recess is not taken into account.

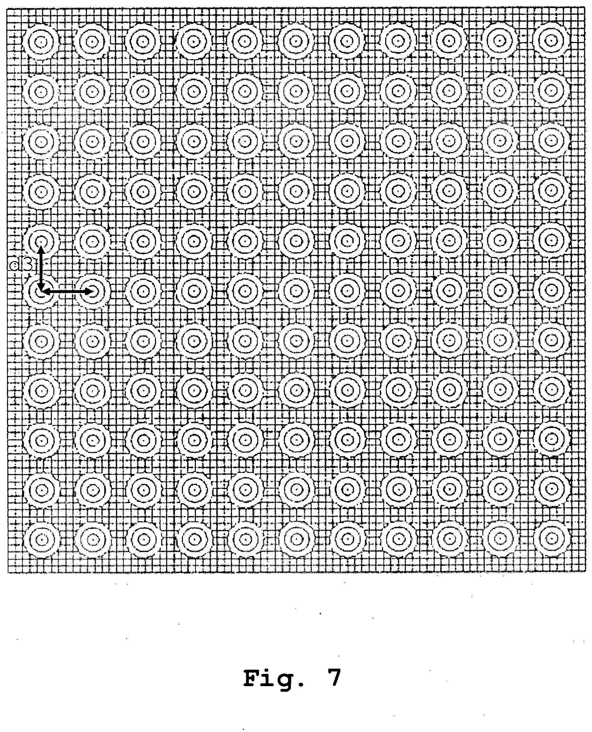

In Fig. 7, a further embodiment of the optic assembly of the present invention is shown. Here, a rectangular shape of the optic assembly is shown. Again, the distance d₃ between the first light emission structures is indicated.

In Fig. 8, a light distribution within and outside of the luminaire and optic assembly are shown. It can readily be seen that the centrally shown first light emission structure results in a directed light emission, while the second light emission structures located towards the side of the figure result in a diffuse distributed light distribution characteristic.

Also readily visible are internal reflections of light emitted by the light source. The reflections occur between the internal surfaces of the body and the first and second light emission structures. These internal reflections further distribute the light within the body and result in an optimal distribution of the light emission.

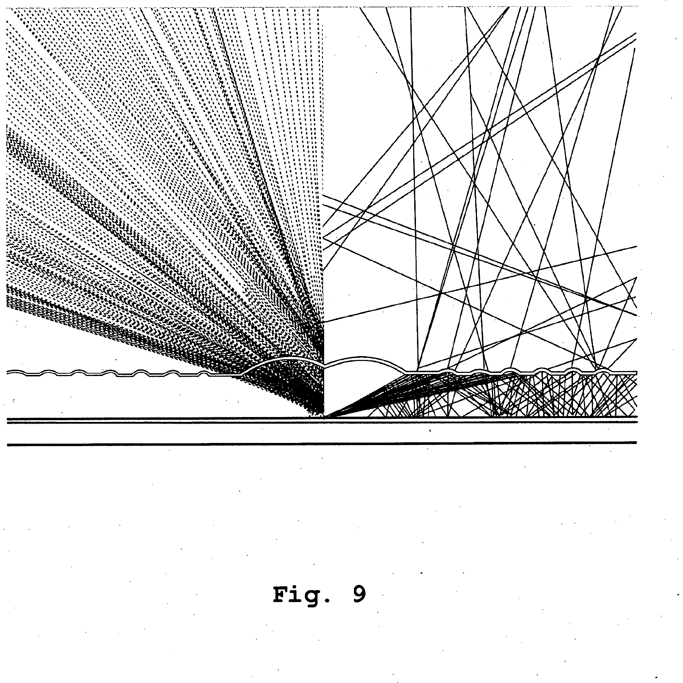

In Fig. 9, the light emission and internal light distribution within an embodiment of the present invention is shown. The left side of the figure only shown the rays of light interacting with the first light emission structure, while the right side of the figure only shown rays of light interacting with the second light emission structures. It can readily be seen how the different light emission structures generate different light emission characteristics.

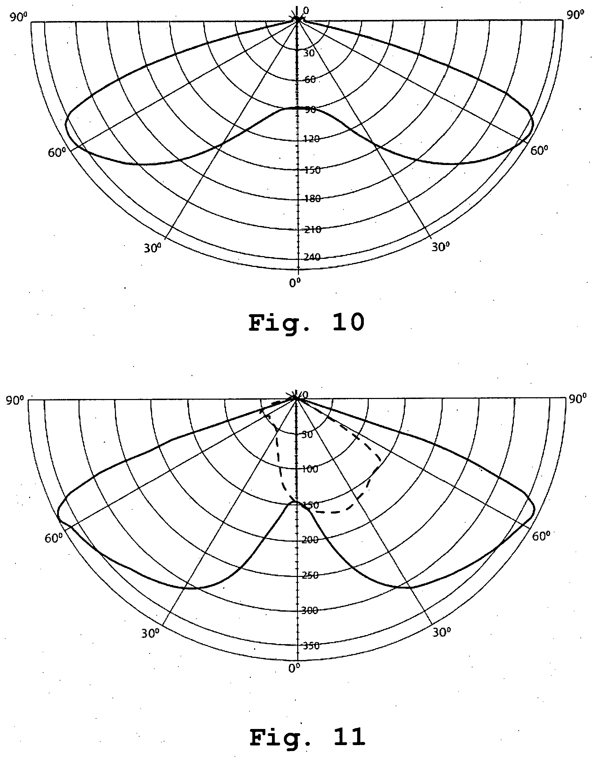

In Fig. 10, a light directivity of a further embodiment of the present invention is shown. Especially, the diffuse light emission in the side lobes is readily visible.

In Fig. 11, a light distribution characteristic of a further embodiment of the present invention is shown. Here, the use of asymmetric light emission structures, such as asymmetric lenses can readily be seen.

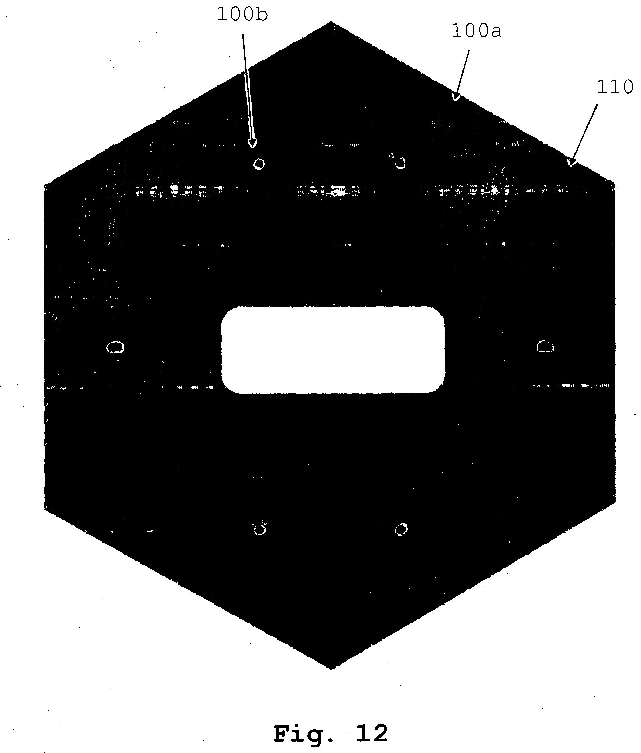

Finally, in Fig. 12, a heat map of light emission of a further embodiment of the present invention is shown. Here, different light strengths emitted by different regions of the optic assembly can be seen. While the second light emission structures 110 generate a low level diffuse light, the first light emission structures 100 generate a more focused, stronger light emission.

It can readily be seen that by use of these different types of light emission structures, the light emission can be fine-tuned to a desired characteristic.

The present invention is not limited to the embodiments shown. Especially, no limitation to specific materials and exact shapes of the structures is intended. Especially, the figures are not to be understood as representing the exact measurements of the embodiments. Any and all of the shown and described features may be employed in any advantageous combination.

## Claims

1. Optic assembly (10), comprising:
- at least one light entrance surface (130), configured to receive light from a light source (21),
- at least one first light emission structure (100),
- a plurality of second light emission structures (110), and
- a body (120), configured to
- receive light from the light entrance surface (130),
- guide a first part of the received light to the at least one first light emission structure (100),
- distribute a second part of the received light within the body, and
- guide the distributed second part of the received light to the plurality of second light emission structures (110).

2. Optic assembly (10) according to claim 1,
wherein the body (120) is configured to
- guide the first part of the received light directly, without leaving the body, to the at least one first light emission structure (100),
- guide the distributed second part of the received light directly, without leaving the body, to the plurality of second light emission structures (110).

3. Optic assembly (10) according to claim 1 or 2,
wherein the body (120) consists of a plastic material, preferably from a pmma material, and/or
wherein the at least one light emission structure (100) consist of a plastic material, preferably from a pmma material, and/or
wherein the plurality of second light emission structures (110) consist of a plastic material, preferably from a pmma material.

4. Optic assembly (10) according to any of claims 1 to 3,
wherein the body (120), the at least one first light emission structure (100), and the plurality of second light emission structures (110) consist of a single piece of material.

5. Optic assembly (10) according to any of the claims 1 to 4,
wherein the at least one first light emission structure (100) is arranged on a light emission surface of the optic assembly (10), and
wherein the plurality of second light emission structures (110) are arranged around the plurality of first light emission structures (100) along the light emission surface of the optic assembly (10).

6. Optic assembly (10) according to claims 5,
wherein the optic assembly comprises a plurality of first light emitting structures (100), and a plurality of light entrance surfaces (130),
wherein one of the plurality of light entrance surfaces (130) is arranged opposite of each first emission structures (100), and
wherein the plurality of second light emission structures (110) are arranged between the plurality of first light emission structures (100) along the light emission surface of the optic assembly (10), preferably filling the entire area between the plurality of first light emission structures (100).

7. Optic assembly (10) according to any of the claims 5 or 6,
wherein the plurality of first light emission structures (100) have an average distance d3 from each other, and
wherein d3 is 5mm - 50mm, preferably 8mm - 30mm, most preferably 12mm - 20mm.

8. Optic assembly (10) according to any of the claims 1 to 7,
wherein the at least one first light emission structure (100) comprise a circular lens, having a diameter d1 of 2mm - 30mm, preferably 4mm - 20mm, most preferably 8mm - 12mm, and/or,
wherein the at least one first light emission structures (100) comprises an elliptical lens, having a major axis d1 of 2mm - 30mm, preferably 4mm - 20mm, most preferably 8mm - 12mm.

9. Optic assembly (10) according to any of the claims 1 to 8,
wherein the plurality of second light emission structures (110) are a matrix of lenses, and/or
wherein the lenses of the matrix of lenses have a diameter d2 of 0,5mm - 10mm, preferably 1mm - 5mm, most preferably 1,5mm - 3mm, and/or,
wherein the lenses of the matrix of lenses are circular or elliptical or hexagonal or square shaped or rectangle shaped lenses, and/or
wherein the lenses of the matrix of lenses are convex with regard to the body (120) of the optical assembly, and/or
wherein the edge of the surface of each of the lenses of the matrix of lenses rises with and angle a, wherein a is 5° - 45°, preferably 10° - 35°, most preferably 15° - 25°.

10. Optic assembly (10) according to any of the claims 1 to 9,
wherein the light entrance surface (130) is formed as a recess and/or indentation in the body (120).

11. Optic assembly (10) according to any of the claims 1 to 10,
wherein the body (120), the at least one first light emission structure (100) and the plurality of second light emission structures (110) form a largely flat shape or a convex shape with regard to a light emission direction.

12. Optic assembly (10) according to any of the claims 1 to 11,
wherein the body (120) comprises a rear surface, and
wherein the rear surface and emission surfaces of the at least one first light emission structure (100) and the plurality of second light emission structures (110) are configured to reflect light inside the body (120), preferably by way of total internal reflection facilitating a distribution of light within the body (120).

13. Optic assembly (10) according to any of the claims 1 to 12,
wherein the at least one first light emission structure (100) is configured to emit light in a directed manner, and/or
wherein the plurality of second light emission structures (110) are configured to emit light in a diffuse manner.

14. Luminaire (1), comprising an optic assembly (10) according to any of the claims 1 to 13 and a light source (21).

15. Luminaire according to claim 14,
wherein the light source (21) is an LED module (21), comprising at least one LED, and wherein the at least one LED is arranged opposite of the at least one first light emitting structure.
